Europäisches Patentamt

(19)   European Patent Office

Office européen des brevets

(11)   EP 0 553 924 B1

(12)                    EUROPEAN PATENT SPECIFICATION

(45) Date of publication and mention          (51) Int. Cl.⁶: **C01B 3/28**, C01B 3/24,
     of the grant of the patent:                        C01B 31/18, C10J 3/12
     **20.11.1996 Bulletin 1996/47**

(21) Application number: **93200186.0**

(22) Date of filing: **25.01.1993**

(54) **Process for producing a hydrogen-containing gas**

Verfahren zur Erzeugung eines Wasserstoff enthaltenden Gases

Procédé pour la production d'un gaz contenant de l'hydrogène

(84) Designated Contracting States:              (72) Inventor: **van der Burgt, Maarten Johannes**
     **DE GB NL**                                        **NL-2596 HR Den Haag (NL)**

(30) Priority: **27.01.1992 EP 92200224**        (56) References cited:
                                                       **EP-A- 0 219 163**            **GB-A- 883 751**
(43) Date of publication of application:
     **04.08.1993 Bulletin 1993/31**               • **RESEARCH DISCLOSURE no. 327, July 1991,**
                                                     **EMSWORTH, GB , XP258792 ANONYMOUS**
(73) Proprietor: **SHELL INTERNATIONALE**            **'Recuperator'**
     **RESEARCH**
     **MAATSCHAPPIJ B.V.**
     **2596 HR Den Haag (NL)**

## Description

The invention relates to a process for producing a hydrogen-containing gas. In particular, the present invention relates to the production of hydrogen-containing gases from hydrocarbon-containing gases such as natural gas, associated gas (i.e. gas which is produced together with oil in production fields) and (waste) hydrocarbon gases from e.g. a Fischer-Tropsch synthesis, etc.

Many processes are known for the conversion of hydrocarbonaceous material into hydrogen-containing gaseous products such as synthesis gas (which comprises in addition to hydrogen a substantial amount of carbon monoxide and usually small amounts of carbon dioxide, steam and/or unconverted hydrocarbons). Accordingly, substantially pure hydrogen gas will only be obtained after subjecting product gases to, sometimes extensive, further treatments such as CO-shifting, absorption, refrigeration, membrane separation and/or contacting with molecular sieves.

It is further known from EP-A-0 191 522 that the above-mentioned gas treatments can be avoided by applying a process in which hydrocarbons are converted thermally or catalytically into carbon and substantially pure hydrogen in a first reaction zone comprising a fluidized bed of hot solid particles and wherein the particles with carbon deposited thereon are transported to a second reaction zone in which a fluidized bed is maintained wherein said carbon is converted with steam into synthesis gas; the particles from the first and/or the second reaction zone are subsequently transported to a heating zone where the particles are contacted in a fluidized state with the combustion products of fuel gas and/or at least part of the hydrogen or the carbon monoxide obtained in said process and combusted with an oxygen-containing gas.

However, in such processes the use of fluidized beds usually leads to entrainment of solid particles from these beds by product gases leaving the fluidized beds; consequently a fluidized bed has to be accompanied by solids/gas separation means (e.g. cyclones). Moreover, the repeated transportation of substantial amounts of hot solid particles from one reaction zone to another and the continuous fluidization of said particles in the reaction zones will lead to the formation of fine particulate material which has a negative influence on the solids/gas separation efficiency and may furthermore pose environmental problems.

It is also known from EP-A-0 219 163 that hydrogen-containing gas can be produced, without either gas separation treatment(s) or solids/gas separation being required, by carrying out a process in which a heated mass of non-fluidized solids is used to provide heat required for carrying out separate endothermic cracking and steam gasification steps.

It has now been found that hydrogen and carbon monoxide can be produced separately at high thermal efficiencies with any desired $H_2/CO$ ratio.

The invention therefore provides a process for producing a hydrogen-containing gas from hydrocarbon-containing gases, which comprises the following steps:

(i) endothermically cracking a hydrocarbon-containing gas substantially in the absence of steam, into carbon and hydrogen-containing gas by contacting said material with a heated mass of non-fluidized solids and allowing carbon to deposit on the solids;
(ii) exothermically reacting the carbon formed in step (i) with an oxygen-containing gas, and alternately repeating steps (i) and (ii),

characterized in that step (ii) is a partial oxidation (oxygen gasification) of the said carbon, said step comprising leading essentially pure oxygen over the bed of solids.

Essentially pure oxygen is defined as an oxygen-containing gas having an oxygen content of more than 85 vol.%

In this description a partial oxidation process of carbon is defined as a process producing at most 25 vol.% of $CO_2$ in the end product.

It is already proposed in the manufacture of hydrogen by thermal decomposition of hydrocarbons using a heated mass of non-fluidized solids, to burn the separated carbon which is deposited on a heated mass of non-fluidized solids such as brickwork and utilize the heat thereby obtained in the thermal decomposition of the hydrocarbons next treated.

However, in this known process the heating is carried out by air combustion (complete combustion) of a gas or of carbon produced by methane cracking and in such a manner a CO-containing syngas can not easily be produced.

Hydrogen-containing gas is defined for the present purpose as substantially pure hydrogen or synthesis gas wherein the hydrogen/carbon monoxide molar ratio may vary.

The process according to the invention is suitably carried out in one or more fixed - or moving - beds comprising a heated mass of solids. Fixed beds could be applied which may contain heat-resistant solid material in any desired shape and size, such as a fixed brick matrix or a packed bed of particulate solids. Particulate solids such as packed spheres or cylinders with main dimensions (e.g. diameter, height of the cylinder) of 1-50 mm, and in particular 2-50 mm, are suitably used in the present process.

Various solid materials may be used in the process according to the present invention provided that the material is sufficiently heat resistant and can withstand large temperature variations which occur during start-up and shut-down of the process. Suitable solids comprise refractory oxides, silicium carbide, carbonaceous materials (e.g. petrol cokes) and mixtures thereof. Metal alloys or metal compounds may also be suitably used; these materials have the advantage of possessing a relatively high thermal conductivity and volumetric heat capacity compared with the previously mentioned materials. In some cases it may be advantageous to use solids which, as such or in the form of additional compounds, possess catalytic activity for at least one of the process steps. However, in most cases substantially non-catalytic solids will be most suited for use in the process according to the invention because the deposition of carbon on the surface of the solids will usually lead to a substantial decrease in catalytic activity, if present in fresh solids. Advantageously, the bed of solids comprises alumina beads.

Both step (i) (cracking) and step (ii) (oxygen gasification or partial oxidation) are suitably carried out at a substantially equal pressure from 0.5-50 bar abs. and preferably from 5-20 bar abs.

Preheating of the solids applied in the process according to the invention to any temperature suitable for the purpose may be carried out in various ways. Advantageously, the solids are preheated to a temperature of 1400-1650 °C before being contacted with the hydrocarbon-containing gas of step (i). Suitably the solids are heated by combustion under pressure of a fuel gas with an oxygen-containing gas and contacting the combustion gas with the solids, whereafter the combustion gas is cooled e.g. by preheating the hydrocarbon-containing gas and/or oxygen

Various gaseous hydrocarbonaceous materials can be used as feed for step (i) of the process according to the invention. In particular natural gas, methane, associated gas, LPG and evaporated naphtha are used. In some cases natural gas is preferably subjected to a treatment to remove sulphur and/or inorganic substances before using it as feed for the present process.

The invention also relates to hydrogen- or CO-containing gas obtained by a process as described hereinbefore.

The invention will now be described by way of example in more detail by reference to the following Example.

Example

Thousand kmoles of natural gas essentially consisting of methane is preheated to 200-600 °C and are contacted with a fixed or moving bed of 3 mm alumina beads having a temperature of 1400-1650 °C. The reaction:

$$CH_4 \rightarrow C + 2H_2$$

proceeds until the average temperature in the bed has dropped to 1000-1250 °C. Subsequently the bed is heated by exothermic partial combustion by leading over the bed essentially pure oxygen of 200-400 °C and alternately the steps of contacting natural gas with the bed of beads and heating the bed by oxygen gasification are repeated. Nett 2000 kmoles of hydrogen are thus produced. The purity of the hydrogen is above 95 %vol and no further treating is required. The reducing gas produced in the partial combustion cycle essentially consists of a mixture of 84 %vol CO and 16 %vol $CO_2$.

The gases can be used for the preparation of synthesis gases of virtually all ratios of CO and $H_2$ by blending the gases from the partial combustion stage which are rich in CO with the hydrogen from the cracking stage.

An advantage of the process of the invention is that a reducing gas is produced during both steps: the endothermic cracking of methane and the exothermic oxygen gasification (partial combustion) of the carbon which is deposited on the checker or bead shaped heat carrier.

Various modifications of the present invention will become apparent to those skilled in the art from the foregoing description. Such modifications are intended to fall within the scope of the appended claims.

Claims

1. A process for producing a hydrogen-containing gas from hydrocarbon-containing gases, which comprises the following steps:

    (i) endothermically cracking a hydrocarbon-containing gas substantially in the absence of steam, into carbon and a hydrogen-containing gas by contacting said hydrocarbon-containing gas with a heated mass of non-fluidized solids and allowing carbon to deposit on the solids; and
    (ii) exothermically reacting the carbon formed in step (i) with an oxygen-containing gas; and alternately repeating steps (i) and (ii);

    characterized in that step (ii) is a partial oxidation (oxygen gasification) of the said carbon, said step comprising leading essentially pure oxygen over a bed comprising said solids.

2. The process as claimed in claim 1 characterized in that steps (i) and (ii) are carried out in a fixed or moving bed comprising said solids.

3. The process as claimed in claims 1 or 2 characterized in that the solids are heated to a temperature of 1400-1650 °C, before being contacted with the hydrocarbon-containing gas in step (i).

4. The process as claimed in any one of claims 1-3 characterized in that solids comprising a refractory oxide, silicon carbide, carbonaceous materials or mixtures thereof are applied in steps (i) and (ii).

5. The process as claimed in any one of claims 1-3 characterized in that the solids consist of alumina beads.

6. The process as claimed in any one of claims 1-5 characterized in that the hydrocarbon-containing gas of step (i) is preheated to 200-600 °C.

7. The process as claimed in any one of claims 1-6 characterized in that the endothermic reaction proceeds until the average temperature in the bed of solids has dropped to 1000-1250 °C.

8. The process as claimed in any one of claims 1-7 characterized in that the hydrocarbon-containing gas of step (i) is natural gas.

**Patentansprüche**

1. Verfahren zur Herstellung eines wasserstoffhaltigen Gases, aus kohlenwasserstoffhaltigen Gasen bei dem man:

   (i) ein kohlenwasserstoffhaltiges Gas weitgehend unter Dampfausschluß in Kohlenstoff und ein wasserstoffhaltiges Gas in einer endothermen Reaktion crackt, indem man das kohlenwasserstoffhaltige Gas mit einer erwärmten Masse nichtverwirbelter Feststoffe in Berührung bringt, wobei der Kohlenstoff sich auf den Feststoffen abscheidet; und
   (ii) den in Schritt (i) gebildeten Kohlenstoff mit einem sauerstoffhaltigen Gas in einer exothermen Reaktion umsetzt und die Schritte (i) und (ii) abwechselnd wiederholt;

   dadurch gekennzeichnet, daß es sich bei Schritt (ii) um eine partielle Oxidation (Sauerstoffvergasung) des Kohlenstoffs handelt, bei dem man weitgehend reinen Sauerstoff über eine Feststoffschüttung leitet.

2. Verfahren nach Anspruch 1, dadurch gekennzeichnet, daß man die Schritte (i) und (ii) in einem die Feststoffe enthaltenden Festbett oder Fließbett durchführt.

3. Verfahren nach einem der Ansprüche 1 oder 2, dadurch gekennzeichnet, daß man die Feststoffe, bevor man sie in Schritt (i) mit dem kohlenwasserstoffhaltigen Gas in Berührung bringt, auf eine Temperatur von 1400-1650°C erhitzt.

4. Verfahren nach einem der Ansprüche 1-3, dadurch gekennzeichnet, daß man in den Schritten (i) und (ii) Feststoffe, die aus einem feuerfesten Oxid, Siliciumcarbid, kohlenstoffhaltigen Materialien oder deren Gemischen bestehen, einsetzt.

5. Verfahren nach einem der Ansprüche 1-3, dadurch gekennzeichnet, daß die Feststoffe aus Aluminiumoxidperlen bestehen.

6. Verfahren nach einem der Ansprüche 1-5, dadurch gekennzeichnet, daß man das kohlenwasserstoffhaltige Gas aus Schritt (i) auf 200-600°C vorwärmt.

7. Verfahren nach einem der Ansprüche 1-6, dadurch gekennzeichnet, daß man die endotherme Reaktion fortführt, bis die Durchschnittstemperatur in der Feststoffschüttung auf 1000-1250°C gefallen ist.

8. Verfahren nach einem der Ansprüche 1-7, dadurch gekennzeichnet, daß man als kohlenwasserstoffhaltiges Gas in Schritt (i) Erdgas einsetzt.

**Revendications**

1. Procédé pour la production d'un gaz contenant de l'hydrogène à partir de gaz contenant des hydrocarbures, comprenant les étapes suivantes:

   (i) le craquage de manière endothermique, essentiellement en l'absence de vapeur, d'un gaz contenant des hydrocarbures en carbone et en gaz contenant de l'hydrogène, par la mise en contact dudit gaz contenant des hydrocarbures avec une masse chauffée de solides non fluidisés et en laissant le carbone se déposer sur les solides; et
   (ii) la réaction de manière exothermique du carbone formé à l'étape (i) avec un gaz contenant de l'oxygène, et la répétition de manière alternative des étapes (i) et (ii);

   caractérisé en ce que l'étape (ii) est une oxydation partielle (gazéification à l'oxygène) dudit carbone, ladite étape comprenant la conduite d'oxygène essentiellement pur sur un lit comprenant lesdits solides.

2. Procédé selon la revendication 1, caractérisé en ce que les étapes (i) et (ii) sont effectuées dans un lit fixe ou mobile comprenant lesdits solides.

3. Procédé selon les revendications 1 ou 2, caractérisé en ce que les solides sont chauffés à une température de 1400-1650°C, avant d'être mis en contact avec le gaz contenant des hydrocarbures dans l'étape (i).

4. Procédé selon l'une quelconque des revendications 1 à 3, caractérisé en ce que des solides comprenant un oxyde réfractaire, du carbure de silicium, des matériaux carbonés ou des mélanges de ceux-ci, sont mis en oeuvre dans les étapes (i) et (ii).

5. Procédé selon l'une quelconque des revendications 1 à 3, caractérisé en ce que les solides sont constitués de billes d'alumine.

6. Procédé selon l'une quelconque des revendications 1 à 5, caractérisé en ce que le gaz contenant des hydrocarbures de l'étape (i) est préchauffé à 200-600°C.

7. Procédé selon l'une quelconque des revendications 1 à 6, caractérisé en ce que la réaction endothermique se poursuit jusqu'à ce que la température moyenne dans le lit de solides ait chuté à 1000-1250°C.

8. Procédé selon l'une quelconque des revendications 1 à 7, caractérisé en ce que le gaz contenant des hydrocarbures de l'étape (i) est du gaz naturel.